# EUROPEAN PATENT APPLICATION

(11) **EP 4 704 213 A1**
(43) Date of publication of application: **04.03.2026**
(21) Application number: 25162367.4
(22) Date of filing: 07.03.2025
(51) Int. Cl.: H01M 10/0585, H01M 50/528, H01M 50/533, H01M 50/54

(54) **ELECTRODE ASSEMBLY, SECONDARY BATTERY, AND BATTERY PACK**

(30) Priority: 28.08.2024 KR 20240116104
(71) Applicant: SAMSUNG SDI CO., LTD., Yongin-si, Gyeonggi-do 17084 (KR)
(72) Inventor: LEE, YOUNG JIN, Suwon-si, Gyeonggi-do 16678 (KR); YEOM, GIL CHOUN, Suwon-si, Gyeonggi-do 16678 (KR); MOON, DAE YON, Suwon-si, Gyeonggi-do 16678 (KR)
(74) Representative: Gulde & Partner

(57) **Abstract**

An electrode assembly, a secondary battery, and a battery pack are disclosed. An electrode assembly includes one or more positive electrode plates, one or more negative electrode plates facing the one or more positive electrode plates in a first direction, a first positive electrode tab extending from a positive electrode plate of the one or more positive electrode plates and bent in the first direction, a second positive electrode tab extending from the positive electrode plate and bent in a direction opposite to the first direction, a first negative electrode tab extending from a negative electrode plate of the one or more negative electrode plates and bent in the direction opposite to the first direction, and a second negative electrode tab extending from the negative electrode plate and bent in the first direction.

## Description

### BACKGROUND

### 1. Field

Aspects of embodiments of the present disclosure relate to an electrode assembly, a secondary battery, and a battery pack.

### 2. Discussion of Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure provided to improve understanding of the background of the present disclosure, and thus may include information that does not constitute the related art.

### SUMMARY

According to an aspect of one or more embodiments of the present disclosure, an electrode assembly, a secondary battery, and a battery pack capable of uniformly maintaining a current distribution are provided.

The above and other aspects and features of the present disclosure will be described in or will be apparent from the following description of some embodiments of the present disclosure.

According to one or more embodiments of the present disclosure, an electrode assembly includes one or more positive electrode plates, one or more negative electrode plates each facing the one or more positive electrode plates in a first direction, a first positive electrode tab extending from a positive electrode plate of the one or more positive electrode plates and bent in the first direction, a second positive electrode tab extending from the positive electrode plate and bent in a direction opposite to the first direction, a first negative electrode tab extending from a negative electrode plate of the one or more negative electrode plates and bent in the direction opposite to the first direction, and a second negative electrode tab extending from the negative electrode plate and bent in the first direction.

The first positive electrode tab and the second positive electrode tab may extend from the positive electrode plate in a second direction intersecting the first direction, and the first negative electrode tab and the second negative electrode tab may extend from the negative electrode plate in a direction opposite to the second direction.

The first positive electrode tab and the second positive electrode tab may be spaced apart from each other in a third direction intersecting the first direction and the second direction.

The positive electrode plate may include a first positive electrode section and a second positive electrode section arranged in the third direction, the first positive electrode tab may be connected to the first positive electrode section, and the second positive electrode tab may be connected to the second positive electrode section.

A width of each of the first positive electrode section and the second positive electrode section in the third direction may be in a range of 20 mm to 35 mm.

Areas of the first positive electrode section and the second positive electrode section may be equal to each other.

The positive electrode plate may further include at least one third positive electrode section between the first positive electrode section and the second positive electrode section.

The first negative electrode tab and the second negative electrode tab may be spaced apart from each other in the third direction.

The negative electrode plate may include a first negative electrode section and a second negative electrode section arranged in the third direction, the first negative electrode tab may be connected to the first negative electrode section, and the second negative electrode tab may be connected to the second negative electrode section.

The first positive electrode section and the first negative electrode section may face each other in the first direction.

Areas of the first positive electrode section and the first negative electrode section may be equal to each other.

Areas of the first negative electrode section and the second negative electrode section may be equal to each other.

The positive electrode plate may further include at least one third positive electrode section between the first positive electrode section and the second positive electrode section.

According to one or more embodiments of the present disclosure, a secondary battery includes a case, the electrode assembly according to an embodiment accommodated in the case, a first terminal and a second terminal protruding outward from the case, a first connection member in the case and configured to connect the first positive electrode tab and the second positive electrode tab to the first terminal, and a second connection member in the case and configured to connect the first negative electrode tab and the second negative electrode tab to the second terminal.

The case may include a can having an opening, and a cap plate configured to seal the opening, and the first terminal and the second terminal may be fixed to the cap plate.

The case may include a can having a first opening and a second opening, a first cap plate configured to seal the first opening, and a second cap plate configured to seal the second opening, the first terminal may be fixed to the first cap plate, and the second terminal may be fixed to the second cap plate.

The first connection member may include a first subplate connected to the first positive electrode tab and the second positive electrode tab, and a first current collector extending from the first subplate and connected to the first terminal.

The first subplate may include a first center plate, a first positive electrode subplate extending from the first center plate and in contact with the first positive electrode tab, and a second positive electrode subplate extending from the first center plate and in contact with the second positive electrode tab.

A width of each of the first positive electrode subplate and the second positive electrode subplate in the first direction may be smaller than a thickness of the electrode assembly in the first direction.

According to one or more embodiments of the present disclosure, a battery pack includes a housing and one or more secondary batteries according to an embodiment accommodated in the housing.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a schematic perspective view illustrating a configuration of a battery pack according to an embodiment of the present disclosure;
FIG. 2 is a schematic perspective view illustrating a configuration of a secondary battery according to an embodiment of the present disclosure;
FIG. 3 is a schematic exploded perspective view illustrating the configuration of the secondary battery of FIG. 2;
FIG. 4 is a schematic exploded perspective view illustrating a configuration of an electrode assembly according to an embodiment of the present disclosure;
FIG. 5 is a schematic view illustrating a configuration of a positive electrode plate according to an embodiment of the present disclosure;
FIG. 6 is a view illustrating another example of the positive electrode plate shown in FIG. 5;
FIG. 7 is a schematic view illustrating a configuration of a negative electrode plate according to an embodiment of the present disclosure;
FIG. 8 is a schematic view illustrating a configuration of a first positive electrode tab and a second positive electrode tab according to an embodiment of the present disclosure;
FIG. 9 is a schematic view illustrating a configuration of a first negative electrode tab and a second negative electrode tab according to an embodiment of the present disclosure.
FIG. 10 is a schematic perspective view illustrating a configuration of a first subplate according to an embodiment of the present disclosure;
FIG. 11 is a schematic side view illustrating the configuration of the first subplate according to an embodiment of the present disclosure;
FIG. 12 is a schematic perspective view illustrating a configuration of a second subplate according to an embodiment of the present disclosure;
FIG. 13 is a schematic side view illustrating the configuration of the second subplate according to an embodiment of the present disclosure;
FIGS. 14 and 15 are schematic views illustrating an operating state of the secondary battery according to an embodiment of the present disclosure;
FIG. 16 is a schematic perspective view illustrating a configuration of a secondary battery according to another embodiment of the present disclosure; and
FIG. 17 is a schematic exploded perspective view illustrating the configuration of the secondary battery of FIG. 16.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

Terms used in this specification are for describing embodiments of the present disclosure and are not intended to limit the present disclosure.

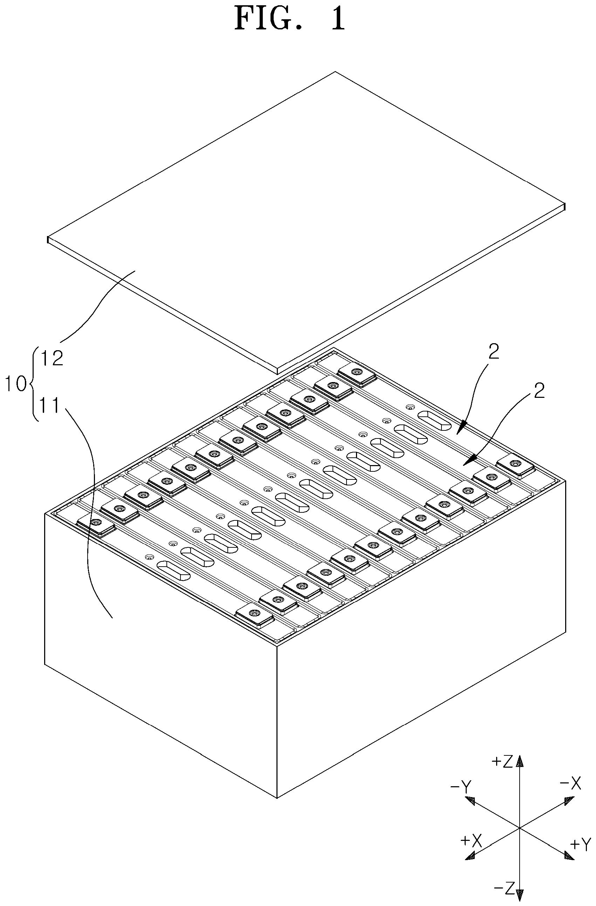

FIG. 1 is a schematic perspective view illustrating a configuration of a battery pack according to an embodiment of the present disclosure.

Referring to FIG. 1, a battery pack according to an embodiment may include a housing 10 and a secondary battery 2.

The housing 10 may form an exterior of the battery pack and may provide a space in which the secondary battery 2 may be accommodated.

The housing 10 according to an embodiment may include a housing body 11 and a cover 12.

The housing body 11 may be formed to have a hollow box shape with an open side. However, a cross-sectional shape of the housing body 11 is not limited to a quadrangular shape, as shown in FIG. 1, and may be varied to have any of various shapes, such as a polygonal shape, a circular shape, and an oval shape.

The cover 12 may be coupled to the housing body 11 and close an internal space of the housing body 11. For example, the cover 12 may be formed to have a generally plate shape and located to face the open side of the housing body 11. The cover 12 may be fixed to the housing body 11 through any of various types of coupling methods, including bolting, welding, latching, fitting and the like.

The secondary battery 2 may function as a unit structure that stores and supplies power in the battery pack.

The secondary battery 2 may be disposed inside the housing 10. A plurality of secondary batteries 2 may be provided. The plurality of secondary batteries 2 may be arranged in two or more columns in at least one of a longitudinal direction of the housing 10 (+X-axis direction in FIG. 1) and a width direction of the housing 10 (+Y-axis direction in FIG. 1). Although FIG. 1 illustrates an example in which the plurality of secondary batteries 2 are arranged in twelve columns in the longitudinal direction of the housing 10, an arrangement form of the plurality of secondary batteries 2 is not limited thereto and may be varied to have any of various forms. The plurality of secondary batteries 2 may be disposed to be parallel to each other. A number of secondary batteries 2 may be varied in various ways according to a size, a shape, and the like of the housing 10.

The plurality of secondary batteries 2 may be electrically connected to each other. As an example, neighboring secondary batteries 2 may be connected in series or in parallel by busbars. The busbars may be formed of an electrically conductive material, such as copper, aluminum, or nickel. A specific shape of the busbar may be varied to have any of various shapes formed such that the neighboring secondary batteries 2 can be electrically connected.

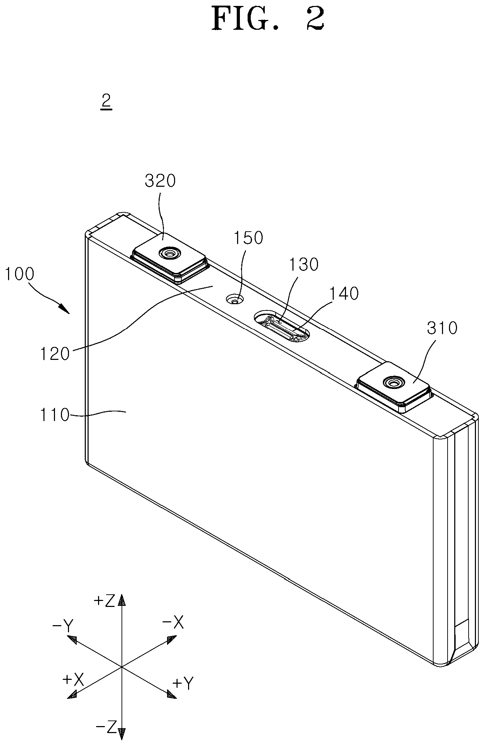

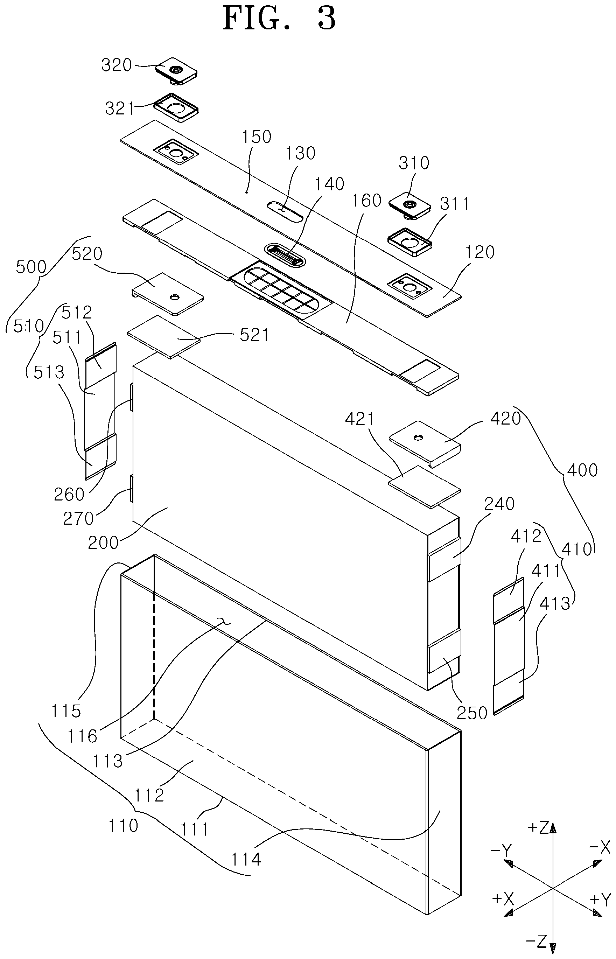

FIG. 2 is a schematic perspective view illustrating a configuration of a secondary battery 2 according to an embodiment of the present disclosure. FIG. 3 is a schematic exploded perspective view illustrating the configuration of the secondary battery 2 of FIG. 2.

As described below, a first direction may be a -X-axis direction in FIGS. 2 and 3, a second direction may be a +Y-axis direction in FIGS. 2 and 3, and a third direction may be -Z-axis direction in FIGS. 2 and 3.

Herein, an example in which the secondary battery 2 is a lithium ion secondary battery, which is a prismatic battery, will be described. However, the present disclosure is not limited thereto, and the secondary battery 2 may be a lithium polymer battery or a cylindrical battery, for example.

Referring to FIGS. 2 and 3, a secondary battery 2 according to an embodiment includes a case 100, an electrode assembly 200, a first terminal 310, a second terminal 320, a first connection member 400, and a second connection member 500.

The case 100 may generally form an exterior of the secondary battery 2 and accommodate the electrode assembly 200.

The case 100 according to an embodiment may include a can 110 and a cap plate 120.

The can 110 may include a bottom portion 111, a front portion 112, a rear portion 113, a first side portion 114, a second side portion 115, and an opening 116.

The bottom portion 111 may form an exterior of a lower side (see FIG. 3) of the case 100. The bottom portion 111 according to an embodiment may have a rectangular plate shape. The bottom portion 111 may be disposed to face a bottom surface of the housing body 11 and seated on the housing body 11.

The front portion 112, the rear portion 113, the first side portion 114, and the second side portion 115 may form an exterior of a peripheral surface of the case 100.

The front portion 112, the rear portion 113, the first side portion 114, and the second side portion 115 according to an embodiment may have a plate shape extending upward (see FIG. 3) from an edge of the bottom portion 111. The front portion 112, the rear portion 113, the first side portion 114, and the second side portion 115 may be disposed to surround a space at an upper side of the bottom portion 111. In an embodiment, the front portion 112, the rear portion 113, the first side portion 114, and the second side portion 115 may be disposed to form a rectangular cross-sectional shape.

The front portion 112 and the rear portion 113 may be disposed to face each other in the first direction. The front portion 112 and the rear portion 113 may be disposed to be parallel to each other. Areas of the front portion 112 and the rear portion 113 may be equal to each other.

The first side portion 114 and the second side portion 115 may be disposed to face each other in the second direction. The first side portion 114 and the second side portion 115 may be disposed to be parallel to each other. Areas of the first side portion 114 and the second side portion 115 may be equal to each other. The area of each of the first side portion 114 and the second side portion 115 may be smaller than the area of each of the front portion 112 and the rear portion 113.

The opening 116 may be a space surrounded by upper end portions of the front portion 112, the rear portion 113, the first side portion 114, and the second side portion 115. The opening 116 may connect an internal space and an external space of the case 100.

Accordingly, the can 110 according to an embodiment may have a rectangular parallelepiped shape with an open upper side.

The cap plate 120 may seal the can 110 and support (e.g., entirely support) the first terminal 310 and second terminal 320, which will be described below.

The cap plate 120 according to an embodiment may be formed to have a flat plate shape. The cap plate 120 may be disposed at the opening 116 of the can 110. The cap plate 120 may be disposed to face the bottom portion 111 of the can 110 in the third direction. The cap plate 120 may be disposed to be parallel to the bottom portion 111.

The cap plate 120 may be mounted on upper end portions of the front portion 112, the rear portion 113, the first side portion 114, and the second side portion 115. An edge area of the cap plate 120 may be coupled to the front portion 112, the rear portion 113, the first side portion 114, and the second side portion 115 through any of various types of coupling methods, including welding, bolting, fitting, latching and the like.

The case 100 according to an embodiment may further include a vent hole 130 and a vent 140.

The vent hole 130 according to an embodiment may be formed to have a shape of a hole that vertically passes through both, or opposite, surfaces of the cap plate 120 in the third direction. The vent hole 130 may provide a path through which flames, gases, smoke, or the like, which are generated inside the case 100 if the secondary battery 2 undergoes thermal runaway caused by an overcurrent or the like, are discharged to the outside of the case 100. The vent hole 130 may be disposed between the first terminal 310 and the second terminal 320. A cross-sectional shape of the vent hole 130 may be varied to have any of various shapes, such as an oval shape, a circular shape, and a polygonal shape.

The vent 140 may be installed in the vent hole 130 and may be opened or closed in response to a change in internal pressure of the case 100. That is, during normal operation of the secondary battery 2, the vent 140 may close the vent hole 130 to block an electrolyte or the like inside the case 100 from flowing out of the case 100 or block moisture, foreign materials, or the like from flowing into the case 100. During thermal runaway of the secondary battery 2, the vent 140 may open the vent hole 130 to guide flames, gases, smoke, or the like generated inside the case 100 to be discharged to the outside of the case 100.

The vent 140 according to an embodiment may be formed to have a generally plate shape. The vent 140 may be fixed to the cap plate 120 through any of various types of coupling methods, including welding, bolting, fitting, latching and the like. The vent 140 may be disposed inside the vent hole 130 or may be disposed to face the vent hole 130 in the third direction at an upper or lower side of the cap plate 120.

In an embodiment, a thickness of the vent 140 in the third direction may be smaller than a thickness of the cap plate 120. Accordingly, the vent 140 may be easily ruptured or fractured if the internal pressure of the case 100 increases. In an embodiment, the vent 140 may include a notch formed to be concave toward the inside of the vent 140 so as to be preferentially fractured if the internal pressure of the case 100 increases.

The case 100 according to an embodiment may further include an electrolyte injection port 150 which is formed to pass through the cap plate 120 and in which a sealing stopper may be installed. The electrolyte injection port 150 may be disposed to be spaced by a distance (e.g., a predetermined distance) from the vent hole 130 in the second direction or a direction opposite to the second direction.

The electrode assembly 200 may function as a unit structure that performs an operation of charging or discharging power in a secondary battery. The electrode assembly 200 may be accommodated inside the case 100.

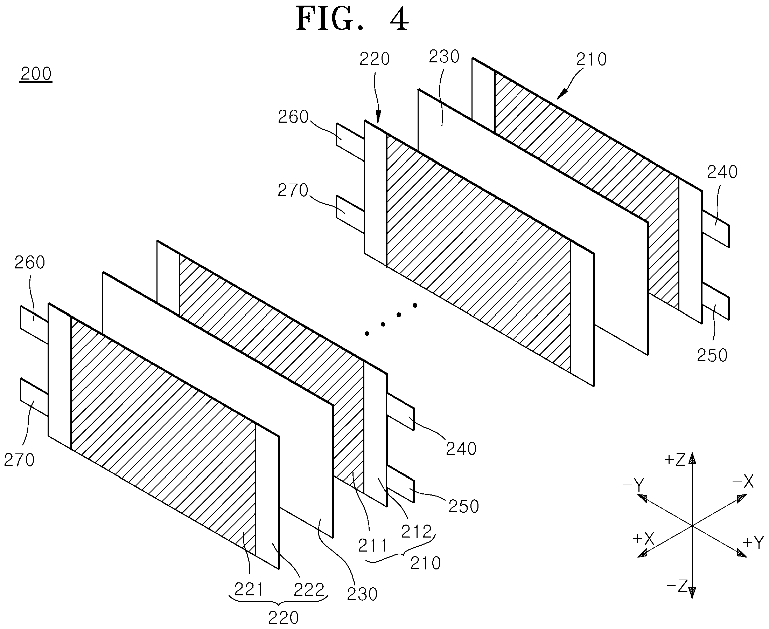

FIG. 4 is a schematic exploded perspective view illustrating a configuration of the electrode assembly according to an embodiment of the present disclosure.

Referring to FIGS. 2 to 4, the electrode assembly 200 according to the present embodiment may include a positive electrode plate 210, a negative electrode plate 220, a first positive electrode tab 240, a second positive electrode tab 250, a first negative electrode tab 260, and a second negative electrode tab 270.

The positive electrode plate 210 may function as a positive electrode of the electrode assembly 200.

The positive electrode plate 210 according to an embodiment may be formed to have a form of foil including a metal material, such as aluminum or an aluminum alloy. Both, or opposite, surfaces of the positive electrode plate 210 may be disposed to be perpendicular to the first direction. A type, size, and shape of the positive electrode plate 210 are not particularly limited as long as the positive electrode plate 210 does not cause chemical changes in a secondary battery 2 and is conductive. The shape of the positive electrode plate 210 may be varied to have any of various shapes other than a rectangular shape, as shown in FIG. 4.

A plurality of positive electrode plates 210 may be provided. The plurality of positive electrode plates 210 may be arranged in the first direction between the front portion 112 and the rear portion 113 of the case 100. A number of positive electrode plates 210 may be varied in various ways according to a charge capacity and the like of the secondary battery 2.

The positive electrode plate 210 may include a first active material layer 211 and a first uncoated portion 212.

The first active material layer 211 may be provided in a form that is applied on at least a portion of the positive electrode plate 210. The first active material layer 211 may be applied on both, or opposite, surfaces or only one surface of the positive electrode plate 210.

In an embodiment, the positive electrode plate 210 functions as the positive electrode, and the first active material layer 211 may include a positive electrode active material.

The positive electrode active material may be a compound (lithiated intercalation compound) capable of reversibly intercalating and deintercalating lithium. In an embodiment, at least one composite oxide of lithium and a metal selected from cobalt, manganese, nickel, iron, and a combination thereof may be used.

For example, the positive electrode active material may include at least one selected from lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=10 may be satisfied. The positive electrode active material may include only one selected from LFP, LMFP, and NCM or may include two or all selected from LFP, LMFP, and NCM.

The first active material layer 211 may further include a positive electrode conductive material.

The positive electrode conductive material may be used to impart conductivity to the first active material layer 211, and any suitable material may be used as the positive electrode conductive material as long as the material does not cause chemical changes and is electronically conductive. Examples of the positive electrode conductive material may include a carbon-based material, such as natural graphite, artificial graphite, carbon black, acetylene black, Ketjen black, carbon fiber, carbon nanofibers, or carbon nanotubes; a metal-based material having the form of a metal powder or metal fiber which contains copper, nickel, aluminum, silver, or the like; a conductive polymer such as a polyphenylene derivative; or a mixture thereof.

The first active material layer 211 may further include a positive electrode binder.

The positive electrode binder attaches particles constituting the positive electrode active material properly to each other and also attaches the positive electrode active material properly to the positive electrode plate 210.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth) acrylic resin, a phenol resin, an epoxy resin, polyvinyl alcohol, and a combination thereof.

If the aqueous binder is used as the positive electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. As the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The positive electrode plate 210 may include the first uncoated portion 212 on which the first active material layer 211 is not applied. The first uncoated portion 212 according to an embodiment may be disposed at an end area of the positive electrode plate 210 located to face the first side portion 114 inside the case 100. However, the first uncoated portion 212 is not limited to such a form and, in an embodiment, may be formed on an entire edge area of the positive electrode plate 210.

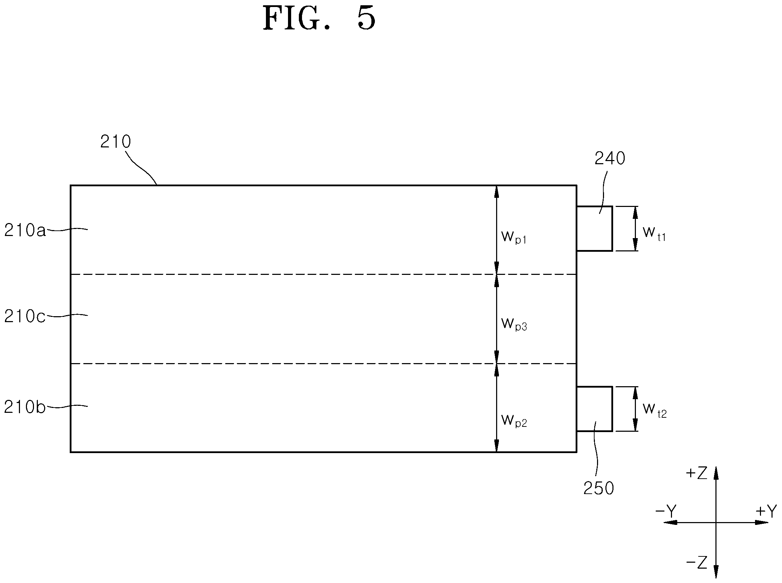

FIG. 5 is a schematic view illustrating a configuration of the positive electrode plate according to one embodiment of the present disclosure.

Referring to FIG. 5, the positive electrode plate 210 according to an embodiment may include a first positive electrode section 210a and a second positive electrode section 210b.

The first positive electrode section 210a and the second positive electrode section 210b may be a part of areas of the positive electrode plate 210 which do not overlap each other in an entire area of the positive electrode plate 210.

According to an embodiment, the first positive electrode section 210a and the second positive electrode section 210b may be arranged in the third direction. That is, the first positive electrode section 210a and the second positive electrode section 210b may be different areas arranged in the third direction in the entire area of the positive electrode plate 210. The first active material layer 211 and the first uncoated portion 212 may be partitioned in the third direction by the first positive electrode section 210a and the second positive electrode section 210b.

Areas of the first positive electrode section 210a and the second positive electrode section 210b may be equal to each other.

As an example, a length of the first positive electrode section 210a in the second direction and a length of the second positive electrode section 210b may each be equal to a length of the positive electrode plate 210 in the second direction.

A width Wₚ₁ of the first positive electrode section 210a in the third direction and a width Wₚ₂ of the second positive electrode section 210b may be smaller than the width of the positive electrode plate 210 in the third direction. The width Wₚ₁ of the first positive electrode section 210a in the third direction and the width Wₚ₂ of the second positive electrode section 210b may be equal to each other. For example, the width Wₚ₁ of the first positive electrode section 210a in the third direction and the width Wₚ₂ of the second positive electrode section 210b may each be in a range of 20 mm to 35 mm.

Accordingly, the first positive electrode section 210a and the second positive electrode section 210b may have a rectangular shape that has a length that is equal to the length of the positive electrode plate 210 in the second direction and has a width that is smaller than the width of the positive electrode plate 210 in the third direction.

The positive electrode plate 210 according to an embodiment may further include a third positive electrode section 210c.

The third positive electrode section 210c may be disposed between the first positive electrode section 210a and the second positive electrode section 210b. The first positive electrode section 210a, the third positive electrode section 210c, and the second positive electrode section 210b may be sequentially arranged in the third direction.

A length of the third positive electrode section 210c in the second direction may be equal to the length of the positive electrode plate 210 in the second direction.

A width Wₚ₃ of the third positive electrode section 210c in the third direction may be smaller than the width of the positive electrode plate 210 in the third direction. The width Wₚ₃ of the third positive electrode section 210c in the third direction may be equal to each of the width Wₚ₁ of the first positive electrode section 210a in the third direction and the width Wₚ₂ of the second positive electrode section 210b. As an example, the width Wₚ₃ of the third positive electrode section 210c in the third direction may be in a range of 20 mm to 35 mm.

A sum of the width Wₚ₁ of the first positive electrode section 210a in the third direction, the width Wₚ₂ of the second positive electrode section 210b, and the width Wₚ₃ of the third positive electrode section 210c may be equal to the width of the positive electrode plate 210 in the third direction.

Although FIG. 5 illustrates an example in which the positive electrode plate 210 according to the present embodiment includes the third positive electrode section 210c, the present disclosure is not limited thereto, and the positive electrode plate 210 may be provided to include only the first positive electrode section 210a and the second positive electrode section 210b without the third positive electrode section 210c. In this case, a sum of the width Wₚ₁ of the first positive electrode section 210a in the third direction and the width Wₚ₂ of the second positive electrode section 210b may be equal to the width of the positive electrode plate 210 in the third direction.

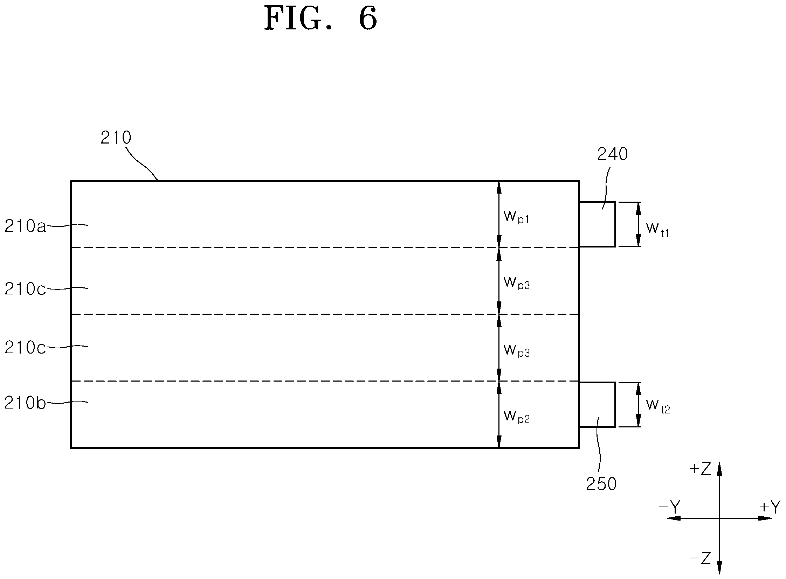

FIG. 6 is a view illustrating another example of the positive electrode plate shown in FIG. 5.

Referring to FIG. 6, the positive electrode plate 210 may include a plurality of third positive electrode sections 210c.

The plurality of third positive electrode sections 210c may be arranged in the third direction between the first positive electrode section 210a and the second positive electrode section 210b. An area of each third positive electrode section 210c may be equal to each of the areas of the first positive electrode section 210a and the second positive electrode section 210b. Although FIG. 6 illustrates an example in which two third positive electrode sections 210c are formed, the number of third positive electrode sections 210c is not limited thereto, and a design thereof may be varied to have various numbers thereof, such as two or four.

The negative electrode plate 220 may function as a negative electrode of the electrode assembly 200.

The negative electrode plate 220 according to an embodiment may be formed to have a shape of foil including a metal material, such as copper, a copper alloy, nickel, or a nickel alloy. Both, or opposite, surfaces of the negative electrode plate 220 may be disposed to be perpendicular to the first direction. A type, size, and shape of the negative electrode plate 220 are not particularly limited as long as the negative electrode plate 220 does not cause chemical changes in a secondary battery 2 and is conductive. A cross-sectional shape of the negative electrode plate 220 may be varied to any of various shapes other than a rectangular shape, as shown in FIG. 4.

A plurality of negative electrode plates 220 may be provided. The plurality of negative electrode plates 220 may be arranged in the first direction between the front portion 112 and the rear portion 113 of the case 100. The plurality of positive electrode plates 210 and negative electrode plates 220 may be alternately disposed in the first direction. The positive electrode plates 210 and the negative electrode plates 220 may be spaced at a distance (e.g., a predetermined distance) from each other in the first direction.

The negative electrode plate 220 may be disposed to face the positive electrode plate 210 in the first direction.

The negative electrode plate 220 may include a second active material layer 221 and a second uncoated portion 222.

The second active material layer 221 may be provided in a form in which the second active material layer 221 is applied on at least a portion of the negative electrode plate 220. The second active material layer 221 may be applied on both, or opposite, surfaces or only one surface of the negative electrode plate 220.

In an embodiment, the negative electrode plate 220 functions as the negative electrode, and the second active material layer 221 may include a negative electrode active material.

The negative electrode active material may include a material capable of reversibly intercalating/deintercalating lithium ions, a lithium metal, a lithium metal alloy, a material capable of doping and undoping lithium, or a transition metal oxide.

The material capable of reversibly intercalating/deintercalating lithium ions may include a carbon-based negative electrode active material, such as crystalline carbon, amorphous carbon, or a combination thereof. Examples of the crystalline carbon may include graphite, such as natural graphite or artificial graphite having a shapeless, plate-like, flake-like, spherical, or fibrous form. Examples of the amorphous carbon may include soft carbon, hard carbon, mesophase pitch carbide, or fired coke.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and undoping lithium, a Si-based negative electrode active material or a Sn-based negative electrode active material may be used. The Si-based negative electrode active material may be silicon, a silicon-carbon composite, SiOₓ, wherein 0<x≤2, a Si-Q alloy (wherein Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon with which surfaces of the silicon particles are coated. For example, the silicon-carbon composite may include a secondary particle (core) formed by bonding silicon primary particles and an amorphous carbon coating layer (shell) located on a surface of the secondary particle. The amorphous carbon may also be located between the silicon primary particles, and thus, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles and an amorphous carbon coating layer located on a surface of the core.

The Si-based negative electrode active material or Sn-based negative electrode active material may be used after being mixed with a carbon-based negative electrode active material.

The second active material layer 221 may further include a negative electrode conductive material and a negative electrode binder.

The negative electrode conductive material may impart conductivity to the second active material layer 221, and any suitable material may be used as the positive electrode conductive material as long as the material does not cause chemical changes and is electronically conductive. Examples of the negative electrode conductive material may include a carbon-based material, such as natural graphite, artificial graphite, carbon black, acetylene black, Ketjen black, carbon fiber, carbon nanofibers, or carbon nanotubes; a metal-based material having the form of a metal powder or metal fiber which contains copper, nickel, aluminum, silver, or the like; a conductive polymer such as a polyphenylene derivative; or a mixture thereof.

The negative electrode binder attaches particles constituting the negative electrode active material properly to each other and also attaches the negative electrode active material properly to the negative electrode plate 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth) acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, phenol resin, an epoxy resin, polyvinyl alcohol, and a combination thereof.

If the aqueous binder is used as the negative electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. As the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The negative electrode plate 220 may include the second uncoated portion 222 on which the second active material layer 221 is not applied. The second uncoated portion 222 according to an embodiment may be disposed on an end area of the negative electrode plate 220 disposed to face the second side portion 115 inside the case 100. However, the second uncoated portion 222 is not limited to such a form and, in an embodiment, may be formed on an entire edge area of the negative electrode plate 220.

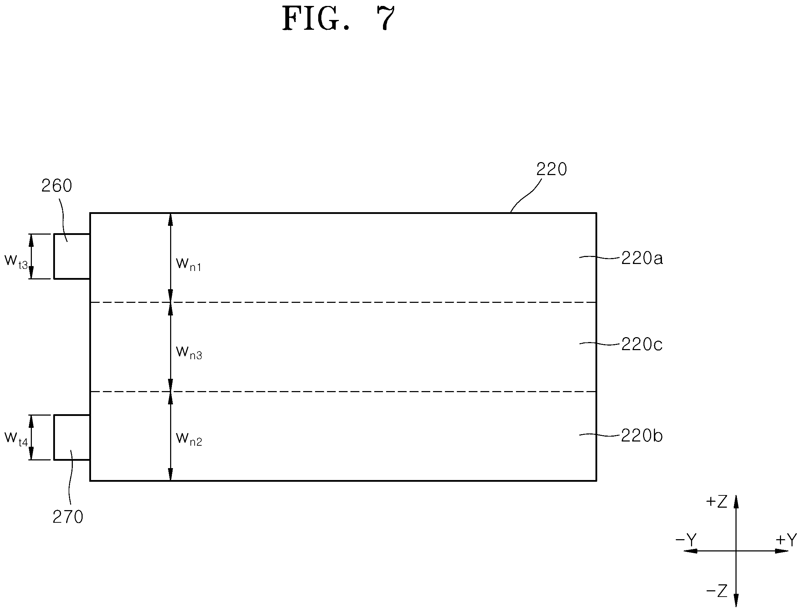

FIG. 7 is a schematic view illustrating a configuration of the negative electrode plate according to an embodiment of the present disclosure.

Referring to FIG. 7, the negative electrode plate 220 according to an embodiment may include a first negative electrode section 220a and a second negative electrode section 220b.

The first negative electrode section 220a and the second negative electrode section 220b may be a part of areas of the negative electrode plate 220 that do not overlap each other in an entire area of the negative electrode plate 220.

According to an embodiment, the first negative electrode section 220a and the second negative electrode section 220b may be arranged in the third direction. That is, the first negative electrode section 220a and the second negative electrode section 220b may be different areas arranged in the third direction in the entire area of the negative electrode plate 220. The second active material layer 221 and the second uncoated portion 222 may be partitioned in the third direction by the first negative electrode section 220a and the second negative electrode section 220b.

Areas of the first negative electrode section 220a and the second negative electrode section 220b may be equal to each other.

For example, a length of the first negative electrode section 220a in the second direction and a length of the second negative electrode section 220b may each be equal to a length of the negative electrode plate 220 in the second direction.

A width Wₙ₁ of the first negative electrode section 220a in the third direction and a width Wₙ₂ of the second negative electrode section 220b may be smaller than a width of the negative electrode plate 220 in the third direction. The width Wₙ₁ of the first negative electrode section 220a in the third direction and the width Wₙ₂ of the second negative electrode section 220b may be equal to each other. For example, the width Wₙ₁ of the first negative electrode section 220a in the third direction and the width Wₙ₂ of the second negative electrode section 220b may each be in a range of 20 mm to 35 mm.

Accordingly, the first negative electrode section 220a and the second negative electrode section 220b may have a rectangular shape that has a length that is equal to the length of the negative electrode plate 220 in the second direction and has a width that is smaller than the width of the negative electrode plate 220 in the third direction.

When the positive electrode plate 210 and the negative electrode plate 220 are stacked in the first direction, the first negative electrode section 220a and the first positive electrode section 210a may be arranged to face each other in the first direction. An area of the first negative electrode section 220a and an area of the first positive electrode section 210a may be equal to each other. As an example, the length of the first negative electrode section 220a in the second direction and the length of the first positive electrode section 210a in the second direction may be equal to each other. The width Wₙ₁ of the first negative electrode section 220a in the third direction and the width Wₚ₁ of the first positive electrode section 210a in the third direction may be equal to each other.

When the positive electrode plate 210 and the negative electrode plate 220 are stacked in the first direction, the second negative electrode section 220b and the second positive electrode section 210b may be disposed to face each other in the first direction. An area of the second negative electrode section 220b and an area of the second positive electrode section 210b may be equal to each other. As an example, the length of the second negative electrode section 220b in the second direction and the length of the second positive electrode section 210b in the second direction may be equal to each other. The width Wₙ₂ of the second negative electrode section 220b in the third direction and the width Wₚ₂ of the second positive electrode section 210b in the third direction may be equal to each other.

The negative electrode plate 220 according to an embodiment may further include a third negative electrode section 220c.

The third negative electrode section 220c may be disposed between the first negative electrode section 220a and the second negative electrode section 220b. The first negative electrode section 220a, the third negative electrode section 220c, and the second negative electrode section 220b may be sequentially arranged in the third direction.

A length of the third negative electrode section 220c in the second direction may be equal to the length of the negative electrode plate 220 in the second direction.

A width Wₙ₃ of the third negative electrode section 220c in the third direction may be smaller than the width of the negative electrode plate 220 in the third direction. The width Wₙ₃ of the third negative electrode section 220c in the third direction may be equal to each of the width Wₙ₁ of the first negative electrode section 220a in the third direction and the width Wₙ₂ of the second negative electrode section 220b. For example, the width Wₙ₃ of the third negative electrode section 220c in the third direction may be in a range of 20 mm to 35 mm.

A sum of the width Wₙ₁ of the first negative electrode section 220a in the third direction, the width Wₙ₂ of the second negative electrode section 220b, and the width Wₙ₃ of the third negative electrode section 220c may be equal to the width of the negative electrode plate 220 in the third direction.

When the positive electrode plate 210 and the negative electrode plate 220 are stacked in the first direction, the third positive electrode section 210c and the third negative electrode section 220c may be disposed to face each other in the first direction. An area of the third positive electrode section 210c and an area of the third negative electrode section 220c may be equal to each other. For example, the length of the third positive electrode section 210c in the second direction and the length of the third negative electrode section 220c in the second direction may be equal to each other. The width Wₚ₃ of the third positive electrode section 210c in the third direction and the width Wₙ₃ of the third negative electrode section 220c in the third direction may be equal to each other.

In an embodiment, a plurality of third negative electrode sections 220c may be provided. In this case, the plurality of third negative electrode sections 220c may be arranged in the third direction between the first negative electrode sections 220a and the second negative electrode sections 220b. An area of each third negative electrode section 220c may be equal to each of the areas of the first negative electrode section 220a and the second negative electrode section 220b.

Although FIG. 7 illustrates an example in which the negative electrode plate 220 according to an embodiment includes the third negative electrode section 220c, the present disclosure is not limited thereto, and the negative electrode plate 220 may be provided to include only the first negative electrode section 220a and the second negative electrode section 220b without the third negative electrode section 220c. In this case, a sum of the width Wₙ₁ of the first negative electrode section 220a in the third direction and the width Wₙ₂ of the second negative electrode section 220b may be equal to the width of the negative electrode plate 220 in the third direction.

A separator 230 may be disposed between the positive electrode plate 210 and the negative electrode plate 220. The separator 230 may prevent or substantially prevent a short circuit from being formed between the positive electrode plate 210 and the negative electrode plate 220 while allowing lithium ions to move between the positive electrode plate 210 and the negative electrode plate 220.

The separator 230 may be disposed to surround (e.g., entirely surround) a surface area of the electrode assembly 200. Accordingly, the separator 230 may prevent or substantially prevent the positive electrode plate 210 and the negative electrode plate 220 from being directly exposed to the outside of the electrode assembly 200.

As the separator 230, any of polyethylene, polypropylene, polyvinylidene fluoride, or a multilayer thereof having two or more layers may be used, and a mixed multilayer such as a polyethylene/polypropylene double-layered separator, a polyethylene/polypropylene/polyethylene triple-layered separator, or a polypropylene/polyethylene/polypropylene triple-layered separator may be used.

The separator 230 may include a porous substrate and a coating layer which includes an organic material, an inorganic material, or a combination thereof and is located on one surface or both, or opposite, surfaces of the porous substrate.

The porous substrate may be a polymer film formed of any polymer selected from polyolefin, such as polyethylene or polypropylene, polyester, such as polyethylene terephthalate or polybutylene terephthalate, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more types thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and the inorganic material may be mixed and be present in one coating layer or may be in a form in which a coating layer including an organic material and a coating layer including an inorganic material are stacked.

The first positive electrode tab 240 and the second positive electrode tab 250 may be connected to the positive electrode plate 210. The first positive electrode tab 240 and the second positive electrode tab 250 may provide an electrical connection between the positive electrode plate 210 and the first connection member 400 to be described below.

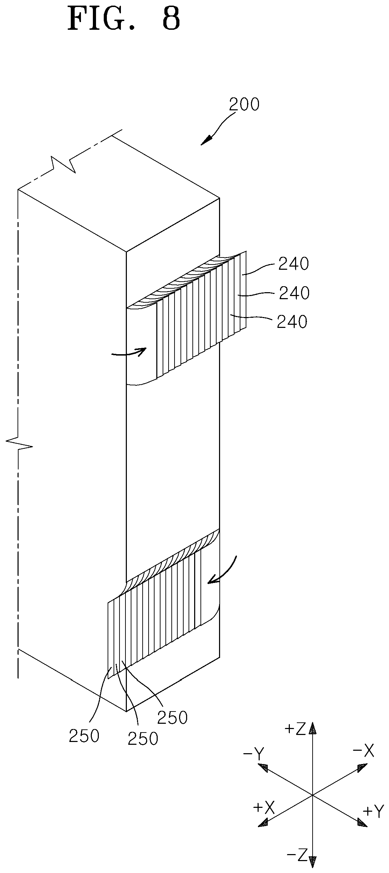

FIG. 8 is a schematic view illustrating a configuration of the first positive electrode tab and the second positive electrode tab according to an embodiment of the present disclosure.

Referring to FIGS. 5 and 8, the first positive electrode tab 240 and the second positive electrode tab 250 according to an embodiment may extend from the positive electrode plate 210 in the second direction, and, in an embodiment, the first uncoated portion 212.

The first positive electrode tab 240 and the second positive electrode tab 250 may be spaced apart from each other in the third direction.

For example, the first positive electrode tab 240 may be connected to the first positive electrode section 210a of the positive electrode plate 210 and may extend from the first positive electrode section 210a in the second direction. The first positive electrode tab 240 may be disposed to face the first side portion 114 inside the case 100. A width Wₜ₁ of the first positive electrode tab 240 in the third direction may be smaller than or equal to the width Wₚ₁ of the first positive electrode section 210a.

A plurality of first positive electrode tabs 240 may be provided. The first positive electrode tabs 240 may extend from the first positive electrode sections 210a of different positive electrode plates 210 in the second direction. The plurality of first positive electrode tabs 240 may be stacked in the first direction.

The first positive electrode tab 240 may be bent in the first direction. That is, an end portion of the first positive electrode tab 240 may have a bent shape in the first direction. Accordingly, the first positive electrode tab 240 may increase a contact area with a first subplate 410 of the first connection member 400 to be described below. The first positive electrode tab 240 may be bent in a direction from the front portion 112 toward the rear portion 113 inside the case 100.

In an embodiment, the first positive electrode tab 240 is bent in the first direction, and a sum of thicknesses of the plurality of first positive electrode tabs 240 stacked in the first direction may be greater than a thickness of the electrode assembly 200 in the first direction. In an embodiment, as shown in FIG. 8, end portions of some of the first positive electrode tabs 240 that are located relatively close to the rear portion 113 among the plurality of first positive electrode tabs 240 stacked in the first direction may protrude from the electrode assembly 200 toward the rear portion 113.

The second positive electrode tab 250 may be connected to the second positive electrode section 210b of the positive electrode plate 210 and may extend from the second positive electrode section 210b in the second direction. A width Wₜ₂ of the positive electrode tab 250 in the third direction may be smaller than or equal to the width Wₚ₂ of the second positive electrode section 210b.

A plurality of second positive electrode tabs 250 may be provided. The second positive electrode tabs 250 may extend from the second positive electrode sections 210b of different positive electrode plates 210 in the second direction. The plurality of second positive electrode tabs 250 may be stacked in the first direction.

The second positive electrode tab 250 may be bent in a direction opposite to the first direction. That is, an end portion of the second positive electrode tab 250 may have a bent shape in the direction opposite to the first direction. The second positive electrode tab 250 may be bent in a direction from the rear portion 113 toward the front portion 112 inside the case 100.

In an embodiment, the second positive electrode tab 250 is bent in the direction opposite to the first direction, and a sum of thicknesses of the plurality of second positive electrode tabs 250 stacked in the first direction may be greater than the thickness of the electrode assembly 200 in the first direction. In an embodiment, as shown in FIG. 8, end portions of some of the second positive electrode tabs 250 that are located relatively close to the front portion 112 among the plurality of second positive electrode tabs 250 stacked in the first direction may protrude from the electrode assembly 200 toward the front portion 112.

The first negative electrode tab 260 and the second negative electrode tab 270 may be connected to the negative electrode plate 220. The first negative electrode tab 260 and the second negative electrode tab 270 may provide an electrical connection between the negative electrode plate 220 and the second connection member 500 to be described below.

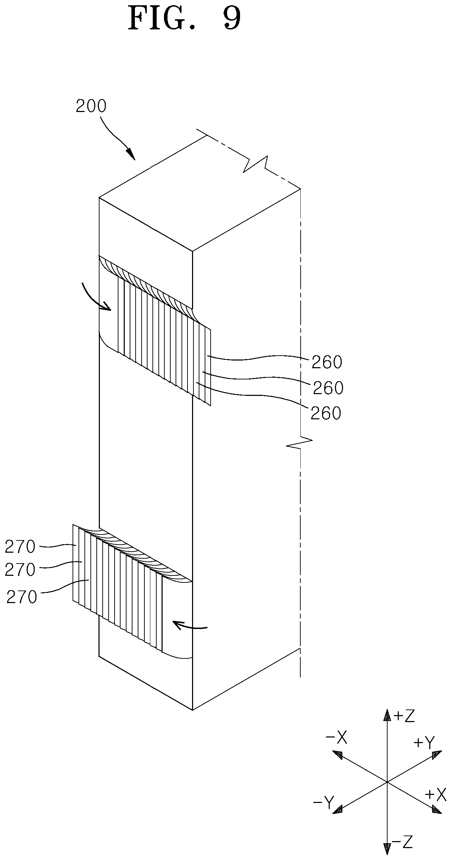

FIG. 9 is a schematic view illustrating a configuration of the first negative electrode tab and the second negative electrode tab according to an embodiment of the present disclosure.

Referring to FIGS. 7 and 9, the first negative electrode tab 260 and the second negative electrode tab 270 according to an embodiment may extend from the negative electrode plate 220 in the direction opposite to the second direction, and, in an embodiment, the second uncoated portion 222.

The first negative electrode tab 260 and the second negative electrode tab 270 may be spaced apart from each other in the third direction.

For example, the first negative electrode tab 260 may be connected to the first negative electrode section 220a of the negative electrode plate 220 and may extend from the first negative electrode section 220a in the second direction. The first negative electrode tab 260 may be disposed to face the second side portion 115 inside the case 100. A width Wₜ₃ of the first negative electrode tab 260 in the third direction may be smaller than or equal to the width Wₙ₁ of the first negative electrode section 220a.

A plurality of first negative electrode tabs 260 may be provided. The first negative electrode tabs 260 may extend from the first negative electrode sections 220a of different negative electrode plates 220 in the direction opposite to the second direction. The plurality of first negative electrode tabs 260 may be stacked in the first direction.

The first negative electrode tab 260 may be bent in the direction opposite to the first direction. That is, an end portion of the first negative electrode tab 260 may have a bent shape in the direction opposite to the first direction. Accordingly, the first negative electrode tab 260 may increase a contact area with a second subplate 510 of the second connection member 500 to be described below. The first negative electrode tab 260 may be bent in a direction from the rear portion 113 toward the front portion 112 inside the case 100.

In an embodiment, the first negative electrode tab 260 is bent in the direction opposite to the first direction, and a sum of thicknesses of the plurality of first negative electrode tabs 260 stacked in the first direction may be greater than the thickness of the electrode assembly 200 in the first direction. In an embodiment, as shown in FIG. 9, end portions of some of the first negative electrode tabs 260 that are located relatively close to the front portion 112 among the plurality of first negative electrode tabs 260 stacked in the first direction may protrude from the electrode assembly 200 toward the front portion 112.

The second negative electrode tab 270 may be connected to the second negative electrode section 220b of the negative electrode plate 220 and may extend from the second negative electrode section 220b in the direction opposite to the second direction. A width Wₜ₄ of the second negative electrode section 220b in the third direction may be smaller than or equal to the width Wₙ₂ of the second negative electrode section 220b.

A plurality of second negative electrode tabs 270 may be provided. The second negative electrode tabs 270 may extend from the second negative electrode sections 220b of different negative electrode plates 220 in the direction opposite to the second direction. The plurality of second negative electrode tabs 270 may be stacked in the first direction.

The second negative electrode tab 270 may be bent in the first direction. That is, an end portion of the second negative electrode tab 270 may have a bent shape in the first direction. The second negative electrode tab 270 may be bent in a direction from the front portion 112 toward the rear portion 113 inside the case 100.

In an embodiment, the second negative electrode tab 270 is bent in the first direction, and a sum of thicknesses of the plurality of second negative electrode tabs 270 stacked in the first direction may be greater than the thickness of the electrode assembly 200 in the first direction. In an embodiment, as shown in FIG. 9, the end portions of some of the second negative electrode tabs 270 that are located relatively close to the rear portion 113 among the plurality of second negative electrode tabs 270 stacked in the first direction may protrude from the electrode assembly 200 toward the rear portion 113.

That is, the electrode assembly 200 according to an embodiment may have a form in which a bending direction of the first positive electrode tab 240 and the second negative electrode tab 270 is opposite to a bending direction of the second positive electrode tab 250 and the first negative electrode tab 260.

An insulating plate 160 may be disposed between the cap plate 120 and the electrode assembly 200. The insulating plate 160 may insulate the cap plate 120 from the electrode assembly 200 by preventing or substantially preventing direct contact between the cap plate 120 and the electrode assembly 200. The insulating plate 160 may fix a position of the electrode assembly 200 inside the case 100. The insulating plate 160 may prevent or substantially prevent the electrode assembly 200 from being damaged when the cap plate 120 is deformed toward the inside of the case 100 due to an external impact or the like.

According to an embodiment, the insulating plate 160 may be disposed to face the electrode assembly 200 in the third direction inside the case 100. That is, the cap plate 120, the insulating plate 160, and the electrode assembly 200 may be sequentially disposed in the third direction. The insulating plate 160 may be fixed to an inner surface of the case 100 through any of various types of coupling methods including fitting, latching, welding, bolting, bonding and the like. The insulating plate 160 may be in contact with a surface of the electrode assembly 200 which is disposed to face the opening 116. The insulating plate 160 may be formed of an insulating material, such as polyethylene (PE), polypropylene (PP), polyethylene terephthalate (PET), or rubber.

The first terminal 310 may protrude outward from the cap plate 120. The first terminal 310 may be electrically connected to the positive electrode plate 210 by the first connection member 400 to be described below. Accordingly, the first terminal 310 may be a positive electrode terminal of the secondary battery 2.

The first terminal 310 according to the present embodiment may be inserted into the cap plate 120. An upper end portion of the first terminal 310 may protrude in a direction opposite to the third direction from the cap plate 120. Although FIG. 3 illustrates an example in which a cross-sectional shape of the first terminal 310 is a quadrangular shape, the cross-sectional shape of the first terminal 310 is not limited thereto and may have any of various shapes, such as a circular shape, an oval shape, and a polygonal shape. The first terminal 310 may be formed of an electrically conductive material, such as aluminum, nickel, or copper.

A first gasket 311 may be installed between the cap plate 120 and the first terminal 310. The first gasket 311 may electrically insulate the cap plate 120 from the first terminal 310 and may prevent or substantially prevent moisture or foreign materials from flowing in between the cap plate 120 and the first terminal 310.

The first gasket 311 according to an embodiment may be formed of an insulating material, such as PE, PP, PET, or rubber. The first gasket 311 may be fixed between the cap plate 120 and the first terminal 310 through pressing, injection, bonding, or the like.

The second terminal 320 may be disposed to be spaced apart from the first terminal 310 and may protrude outward from the cap plate 120. The second terminal 320 may be electrically connected to the negative electrode plate 220. Accordingly, the second terminal 320 may be a negative electrode terminal of the secondary battery 2.

The second terminal 320 according to an embodiment may be inserted into the cap plate 120. An upper end portion of the second terminal 320 may protrude in the direction opposite to the third direction from the cap plate 120. Although FIG. 3 illustrates an example in which a cross-sectional shape of the second terminal 320 is a quadrangular shape, the cross-sectional shape of the second terminal 320 is not limited thereto and may have any of various shapes, such as a circular shape, an oval shape, and a polygonal shape. The second terminal 320 may be formed of an electrically conductive material, such as aluminum, nickel, or copper. The second terminal 320 may be disposed at a position spaced by a distance (e.g., a predetermined distance) from the first terminal 310 in the direction opposite to the second direction.

A second gasket 321 may be installed between the cap plate 120 and the second terminal 320. The second gasket 321 may electrically insulate the cap plate 120 from the second terminal 320 and may prevent or substantially prevent moisture or foreign materials from flowing in between the cap plate 120 and the second terminal 320.

The second gasket 321 according to an embodiment may be formed of an insulating material, such as PE, PP, PET, or rubber. The second gasket 321 may be fixed between the cap plate 120 and the second terminal 320 through pressing, injection, bonding, or the like.

The first connection member 400 may be disposed inside the case 100. The first connection member 400 may connect the first positive electrode tab 240 and the second positive electrode tab 250 to the first terminal 310. That is, the first connection member 400 may provide an electrical connection between the positive electrode plate 210 and the first terminal 310.

The first connection member 400 according to an embodiment may include the first subplate 410 and a first current collector 420.

The first subplate 410 may form an exterior of a side of the first connection member 400 and may be connected to the first positive electrode tab 240 and the second positive electrode tab 250.

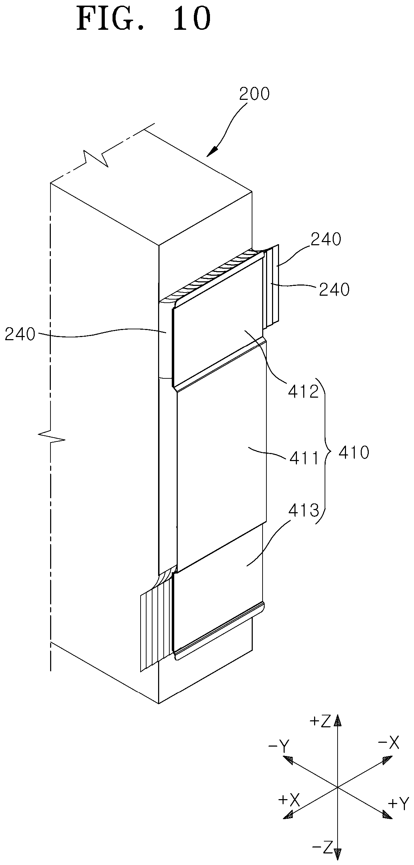

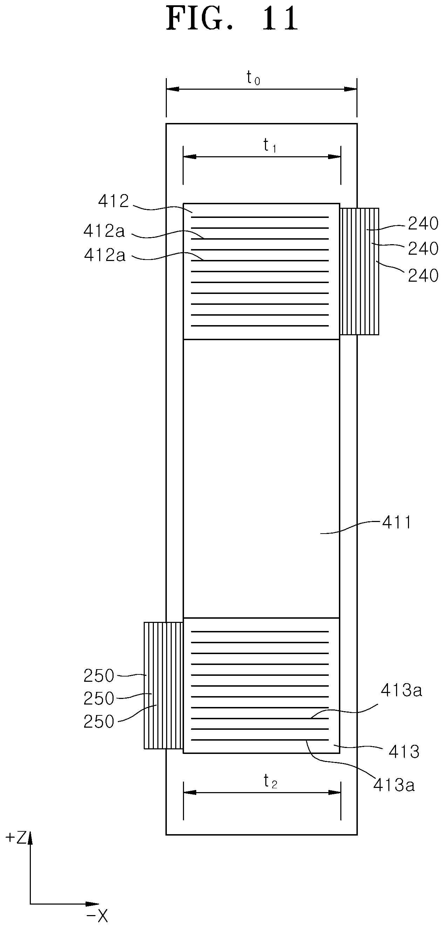

FIG. 10 is a schematic perspective view illustrating a configuration of the first subplate according to an embodiment of the present disclosure; and FIG. 11 is a schematic side view illustrating the configuration of the first subplate according to an embodiment of the present disclosure.

Referring to FIGS. 10 and 11, the first subplate 410 according to an embodiment may include a first center plate 411, a first positive electrode subplate 412, and a second positive electrode subplate 413.

The first center plate 411 may form an exterior of a central portion of the first subplate 410 and may support (e.g., entirely support) the first positive electrode subplate 412 and the second positive electrode subplate 413.

According to an embodiment, the first center plate 411 and the first subplate 410 may be disposed between the electrode assembly 200 and the first side portion 114 of the can 110. The first center plate 411 may be formed to have a generally flat plate shape. The first subplate 410 may be disposed to face the electrode assembly 200 in the second direction. The first subplate 410 may be disposed between the first positive electrode tab 240 and the second positive electrode tab 250. In an embodiment, the first subplate 410 may be disposed to face an end portion of the third positive electrode section 210c and the third negative electrode section 220c, which face the first side portion 114, between the first positive electrode tab 240 and the second positive electrode tab 250.

The first positive electrode subplate 412 may form an exterior of an end portion of the first subplate 410 and may be in contact with the first positive electrode tab 240.

The first positive electrode subplate 412 according to an embodiment may be formed to have a generally flat plate shape. The first positive electrode subplate 412 may extend from the first center plate 411 in the direction opposite to the third direction. The first positive electrode subplate 412 may be disposed to face the first positive electrode tab 240 in the second direction. An inner surface of the first positive electrode subplate 412 may be in direct contact with an end portion of the first positive electrode tab 240.

In an embodiment, the first positive electrode subplate 412 and the first positive electrode tab 240 may be bonded integrally through laser welding, ultrasonic welding, or the like. Accordingly, a first positive electrode welding line 412a for connecting the first positive electrode subplate 412 and the first positive electrode tab 240 may be formed on the first positive electrode subplate 412. The first positive electrode welding line 412a may be disposed such that a longitudinal direction thereof is in the first direction. Accordingly, the first positive electrode welding line 412a may concurrently, or simultaneously, fix the plurality of first positive electrode tabs 240 stacked in the first direction on the first positive electrode subplate 412. A plurality of first positive electrode welding lines 412a may be provided. The plurality of first positive electrode welding lines 412a may be arranged at intervals (e.g., predetermined intervals) in the third direction.

In an embodiment, the first positive electrode tab 240 is bent in the first direction, and the end portion of the first positive electrode tab 240 may be in contact with the first positive electrode subplate 412 in a wide area. Accordingly, bonding strength between the first positive electrode subplate 412 and the first positive electrode tab 240 may be improved.

A thickness t₁ of the first positive electrode subplate 412 in the first direction may be smaller than a thickness t₀ of the electrode assembly 200 in the first direction. Some of the first positive electrode tabs 240 located relatively close to the rear portion 113 among the plurality of first positive electrode tabs 240 stacked in the first direction may protrude outward from the first positive electrode subplate 412 and may not be in direct contact with the first positive electrode subplate 412.

The second positive electrode subplate 413 may form an exterior of another end portion of the first subplate 410 and may be in contact with the second positive electrode tab 250.

The second positive electrode subplate 413 according to an embodiment may be formed to have a generally flat plate shape. The second positive electrode subplate 413 may extend from the first center plate 411 in the third direction. The second positive electrode subplate 413 may be disposed to face the second positive electrode tab 250 in the second direction. An inner surface of the second positive electrode subplate 413 may be in direct contact with an end portion of the second positive electrode tab 250.

In an embodiment, the second positive electrode subplate 413 and the second positive electrode tab 250 may be bonded integrally through laser welding, ultrasonic welding, or the like. Accordingly, a second positive electrode welding line 413a for connecting the second positive electrode subplate 413 and the second positive electrode tab 250 may be formed on the second positive electrode subplate 413. The second positive electrode welding line 413a may be disposed such that a longitudinal direction thereof is in the first direction. Accordingly, the second positive electrode welding line 413a may concurrently, or simultaneously, fix the plurality of second positive electrode tabs 250 stacked in the first direction on the second positive electrode subplate 413. A plurality of second positive electrode welding lines 413a may be provided. The plurality of second positive electrode welding lines 413a may be arranged at intervals (e.g., predetermined intervals) in the third direction.

In an embodiment, the second positive electrode tab 250 is bent in the direction opposite to the first direction, and the end portion of the second positive electrode tab 250 may be in contact with the second positive electrode subplate 413 in a wide area. Accordingly, bonding strength between the second positive electrode subplate 413 and the second positive electrode tab 250 may be improved.

A thickness t₂ of the second positive electrode subplate 413 in the first direction may be smaller than the thickness t₀ of the electrode assembly 200 in the first direction. Some of the second positive electrode tabs 250 located relatively close to the front portion 112 among the plurality of second positive electrode tabs 250 stacked in the first direction may protrude outward from the second positive electrode subplate 413 and may not be in direct contact with the second positive electrode subplate 413.

In an embodiment, the first positive electrode tab 240 and the second positive electrode tab 250 are bent in opposite directions, and the positive electrode plate 210 including the first positive electrode tab 240 that is not in direct contact with the first positive electrode subplate 412 may be electrically connected to the first subplate 410 by the second positive electrode tab 250. Similarly, the positive electrode plate 210 including the second positive electrode tab 250 that is not in direct contact with the second positive electrode subplate 413 may be electrically connected to the first subplate 410 by the first positive electrode tab 240. Accordingly, in the secondary battery 2 according to an embodiment, the first positive electrode tab 240 and the second positive electrode tab 250 may be bent to secure a contact area between the first subplate 410 and the first and second positive electrode tabs 240 and 250, and all of the positive electrode plates 210 may be connected to the first subplate 410 by the first positive electrode tab 240 and the second positive electrode tab 250 which are bent in opposite directions.

The first current collector 420 may extend from the first subplate 410 and may be connected to the first terminal 310.

The first current collector 420 according to an embodiment may be formed of a conductive material, such as aluminum, copper, or nickel. The first current collector 420 may be disposed between the electrode assembly 200 and the cap plate 120. The first current collector 420 may be disposed to face the electrode assembly 200 in the third direction.

A side of the first current collector 420 may be connected to the first subplate 410. For example, the first current collector 420 may be connected to an upper end portion of the first positive electrode subplate 412 extending from the first center plate 411 in the direction opposite to the third direction. The first current collector 420 may be connected to the first positive electrode subplate 412 through any of various coupling methods including welding, bolting, and the like.

Another side of the first current collector 420 may be connected to the first terminal 310. As an example, an upper surface of the first current collector 420 may be in contact with a lower end portion of the first terminal 310 passing through the cap plate 120. The upper surface of the first current collector 420 may be connected to the lower end portion of the first terminal 310 through any of various coupling methods including welding, bolting, and the like.

A first insulator 421 that electrically insulates the first current collector 420 from the electrode assembly 200 may be disposed between the first current collector 420 and the electrode assembly 200. The first insulator 421 according to an embodiment may be formed to have a generally flat plate shape. Both, or opposite, surfaces of the first insulator 421 may be in contact with an upper surface of the electrode assembly 200 and a lower surface of the first current collector 420. The first insulator 421 may be formed of an insulating material, such as PE, PP, PET, or rubber.

The second connection member 500 may be disposed inside the case 100. The second connection member 500 may connect the first negative electrode tab 260 and the second negative electrode tab 270 to the second terminal 320. That is, the second connection member 500 may provide an electrical connection between the negative electrode plate 220 and the second terminal 320.

The second connection member 500 according to an embodiment may include the second subplate 510 and a second current collector 520.

The second subplate 510 may form an exterior of a side of the second connection member 500 and may be connected to the first negative electrode tab 260 and the second negative electrode tab 270.

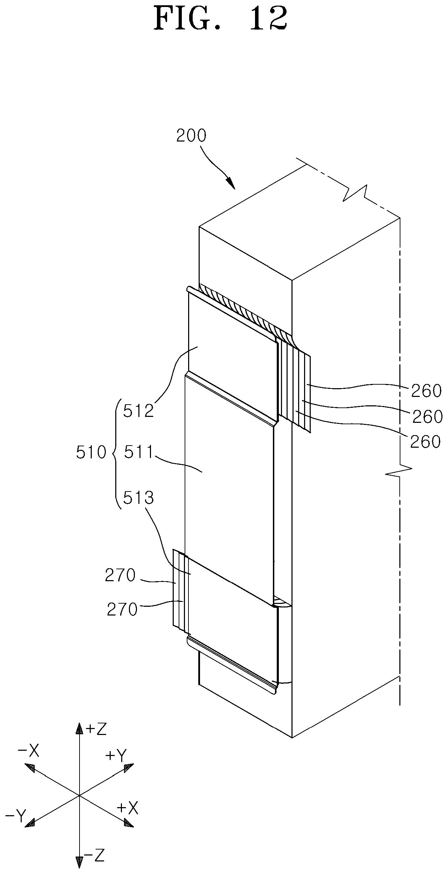

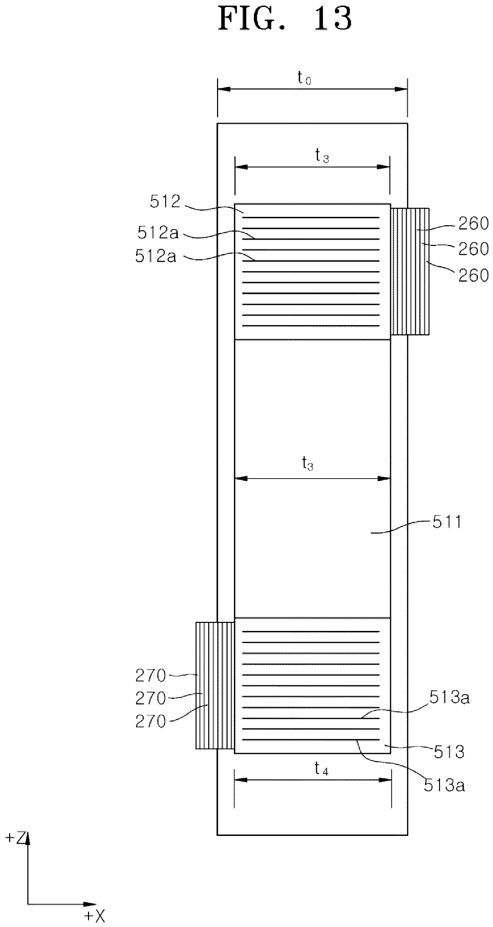

FIG. 12 is a schematic perspective view illustrating a configuration of the second subplate according to an embodiment of the present disclosure; and FIG. 13 is a schematic side view illustrating the configuration of the second subplate according to an embodiment of the present disclosure.

Referring to FIGS. 12 and 13, the second subplate 510 according to an embodiment may include a second center plate 511, a first negative electrode subplate 512, and a second negative electrode subplate 513.

The second center plate 511 may form an exterior of a central portion of the second subplate 510 and may support (e.g., entirely support) the first negative electrode subplate 512 and the second negative electrode subplate 513.

According to an embodiment, the second center plate 511 and the second subplate 510 may be disposed between the electrode assembly 200 and the second side portion 115 of the can 110. The second center plate 511 may be formed to have a generally flat plate shape. The second subplate 510 may be disposed to face the electrode assembly 200 in the direction opposite to the second direction. The second subplate 510 may be disposed between the first negative electrode tab 260 and the second negative electrode tab 270. In an embodiment, the second subplate 510 may be disposed to face other end portions of the third positive electrode section 210c and the third negative electrode section 220c, which face the second side portion 115, between the first negative electrode tab 260 and the second negative electrode tab 270.

The first negative electrode subplate 512 may form an exterior of an end portion of the second subplate 510 and may be in contact with the first negative electrode tab 260.

The first negative electrode subplate 512 according to an embodiment may be formed to have a generally flat plate shape. The first negative electrode subplate 512 may extend from the second center plate 511 in the direction opposite to the third direction. The first negative electrode subplate 512 may be disposed to face the first negative electrode tab 260 in the direction opposite to the second direction. An inner surface of the first negative electrode subplate 512 may be in direct contact with an end portion of the first negative electrode tab 260.

In an embodiment, the first negative electrode subplate 512 and the first negative electrode tab 260 may be bonded integrally through laser welding, ultrasonic welding, or the like. Accordingly, a first negative electrode welding line 512a for connecting the first negative electrode subplate 512 and the first negative electrode tab 260 may be formed on the first negative electrode subplate 512. The first negative electrode welding line 512a may be disposed such that a longitudinal direction thereof is in the first direction. Accordingly, the first negative electrode welding line 512a may concurrently, or simultaneously, fix the plurality of first negative electrode tabs 260 stacked in the first direction on the first negative electrode subplate 512. A plurality of first negative electrode welding lines 512a may be provided. The plurality of first negative electrode welding lines 512a may be arranged at intervals (e.g., predetermined intervals) in the third direction.

In an embodiment, the first negative electrode tab 260 is bent in the direction opposite to the first direction, and the end portion of the first negative electrode tab 260 may be in contact with the first negative electrode subplate 512 in a wide area. Accordingly, bonding strength between the first negative electrode subplate 512 and the first negative electrode tab 260 may be improved.

A thickness t₃ of the first negative electrode subplate 512 in the first direction may be smaller than the thickness t₀ of the electrode assembly 200 in the first direction. Some of the first negative electrode tabs 260 located relatively close to the front portion 112 among the plurality of first negative electrode tabs 260 stacked in the first direction may protrude outward from the first negative electrode subplate 512 and may not be in direct contact with the first negative electrode subplate 512.

The second negative electrode subplate 513 may form an exterior of the other end portion of the second subplate 510 and may be in contact with the second negative electrode tab 270.

The second negative electrode subplate 513 according to an embodiment may be formed to have a generally flat plate shape. The second negative electrode subplate 513 may extend from the second center plate 511 in the third direction. The second negative electrode subplate 513 may be disposed to face the second negative electrode tab 270 in the direction opposite to the second direction. An inner surface of the second negative electrode subplate 513 may be in direct contact with an end portion of the second negative electrode tab 270.

In an embodiment, the second negative electrode subplate 513 and the second negative electrode tab 270 may be bonded integrally through laser welding, ultrasonic welding, or the like. Accordingly, a second negative electrode welding line 513a for connecting the second negative electrode subplate 513 and the second negative electrode tab 270 may be formed on the second negative electrode subplate 513. The second negative electrode welding line 513a may be disposed such that a longitudinal direction thereof is in the first direction. Accordingly, the second negative electrode welding line 513a may concurrently, or simultaneously, fix the plurality of second negative electrode tabs 270 stacked in the first direction on the second negative electrode subplate 513. A plurality of second negative electrode welding lines 513a may be provided. The plurality of second negative electrode welding lines 513a may be arranged at intervals (e.g., predetermined intervals) in the third direction.

In an embodiment, the second negative electrode tab 270 is bent in the first direction, and an end portion of the second negative electrode tab 270 may be in contact with the second negative electrode subplate 513 in a wide area. Accordingly, bonding strength between the second negative electrode subplate 513 and the second negative electrode tab 270 may be improved.

A thickness t₄ of the second negative electrode subplate 513 in the first direction may be smaller than the thickness t₀ of the electrode assembly 200 in the first direction. Some of the second negative electrode tabs 270 located relatively close to the rear portion 113 among the plurality of second negative electrode tabs 270 stacked in the first direction may protrude outward from the second negative electrode subplate 513 and may not be in direct contact with the second negative electrode subplate 513.

In an embodiment, the first negative electrode tab 260 and the second negative electrode tab 270 are bent in opposite directions, and the negative electrode plate 220 including the first negative electrode tab 260 that is not in direct contact with the first negative electrode subplate 512 may be electrically connected to the second subplate 510 by the second negative electrode tab 270. Similarly, the negative electrode plate 220 including the second negative electrode tab 270 that is not in direct contact with the second negative electrode subplate 513 may be electrically connected to the second subplate 510 by the first negative electrode tab 260. Accordingly, in the secondary battery 2 according to an embodiment, the first negative electrode tab 260 and the second negative electrode tab 270 may be bent to secure a contact area between the second subplate 510 and the first and second negative electrode tabs 260 and 270, and all of the negative electrode plates 220 may be connected to the second subplate 510 by the first negative electrode tab 260 and the second negative electrode tab 270 which are bent in opposite directions.

The second current collector 520 may extend from the second subplate 510 and may be connected to the second terminal 320.

The second current collector 520 according to an embodiment may be formed of a conductive material, such as aluminum, copper, or nickel. The second current collector 520 may be disposed between the electrode assembly 200 and the cap plate 120. The second current collector 520 may be disposed to face the electrode assembly 200 in the third direction. The second current collector 520 may be disposed at a position spaced by a distance (e.g., a predetermined distance) from the first current collector 420 in the direction opposite to the second direction.

A side of the second current collector 520 may be connected to the second subplate 510. As an example, the second current collector 520 may be connected to an upper end portion of the first negative electrode subplate 512 extending from the second center plate 511 in the direction opposite to the third direction. The second current collector 520 may be connected to the first negative electrode subplate 512 through any of various coupling methods including welding, bolting, and the like.

Another side of the second current collector 520 may be connected to the second terminal 320. As an example, an upper surface of the second current collector 520 may be in contact with a lower end portion of the second terminal 320 passing through the cap plate 120. The upper surface of the second current collector 520 may be connected to the lower end portion of the second terminal 320 through any of various coupling methods including welding, bolting, and the like.

A second insulator 521 that electrically insulates the second current collector 520 from the electrode assembly 200 may be disposed between the second current collector 520 and the electrode assembly 200. The second insulator 521 according to an embodiment may be formed to have a generally flat plate shape. Both, or opposite, sides of the second insulator 521 may be in contact with the upper surface of the electrode assembly 200 and a lower surface of the second current collector 520. The second insulator 521 may be formed of an insulating material, such as PE, PP, PET, or rubber.

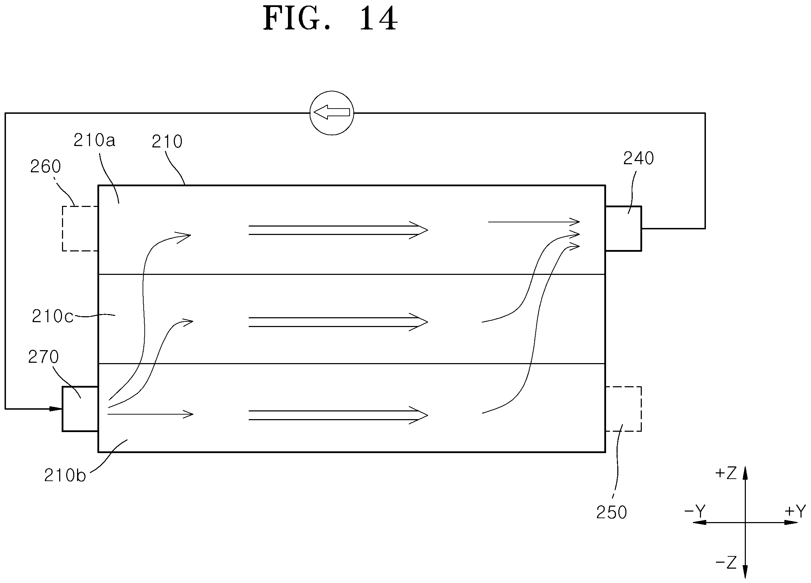

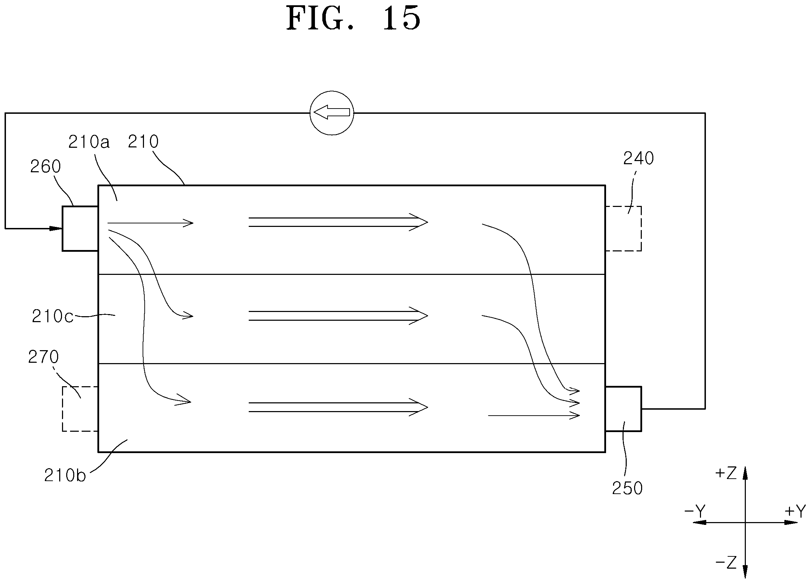

FIGS. 14 and 15 are schematic views illustrating an operating state of the secondary battery 2 according to an embodiment of the present disclosure.

Referring to FIG. 14 and FIG. 15, in the secondary battery 2 according to an embodiment, due to bending shapes of the first positive electrode tab 240, the second positive electrode tab 250, the first negative electrode tab 260, and the second negative electrode tab 270, electrical connections of the electrode assembly 200 may be made differently in the first direction.

In an embodiment, in a central area of the electrode assembly 200, the first positive electrode tab 240 and the second positive electrode tab 250 may be connected to the first subplate 410, and the first negative electrode tab 260 and the second negative electrode tab 270 may be connected to the second subplate 510.

However, in a peripheral area of the electrode assembly 200 located relatively close to the front portion 112 or rear portion 113 of the case 100, some of the first positive electrode tab 240, the second positive electrode tab 250, the first negative electrode tab 260, and the second negative electrode tab 270 may not be in direct contact with the first subplate 410 or the second subplate 510, and, thus, current conduction paths may be relatively reduced as compared to the central area of the electrode assembly 200.

In the secondary battery 2 according to an embodiment, the first positive electrode tab 240 and the second negative electrode tab 270 may be bent in the first direction, and the second positive electrode tab 250 and the first negative electrode tab 260 may be bent in the direction opposite to the first direction, thereby inducing a current to be uniformly distributed to an entire area of the positive electrode plate 210 and the negative electrode plate 220 from the peripheral area of the electrode assembly 200.

For example, as shown in FIG. 14, in a part of an area of the electrode assembly 200 located relatively close to the front portion 112 of the case 100, only the first positive electrode tab 240 and the second negative electrode tab 270 may be connected to the first subplate 410 and the second subplate 510, respectively, and the second positive electrode tab 250 and the first negative electrode tab 260 may not be connected to the first subplate 410 and the second subplate 510.

Accordingly, a current flowing into the second negative electrode tab 270 from the part of the area of the electrode assembly 200 located relatively close to the front portion 112 of the case 100 may be transmitted to the first positive electrode tab 240 through the negative electrode plate 220 and the positive electrode plate 210.

In an embodiment, the second negative electrode tab 270 and the first positive electrode tab 240 are spaced apart from each other in the third direction, and a path of a current may be formed to traverse the negative electrode plate 220 and the positive electrode plate 210 in a diagonal direction.

As an example, with respect to the positive electrode plate 210, a path of a current flowing into an end portion of the second positive electrode section 210b may be formed toward another end portion of the first positive electrode section 210a.

Accordingly, in the secondary battery 2 according to an embodiment, in a part of an area of the electrode assembly 200 located relatively close to the front portion 112 of the case 100, a current may be more uniformly distributed to the first positive electrode section 210a, the second positive electrode section 210b, and the third positive electrode section 210c as compared to a case in which the second negative electrode tab 270 and the second positive electrode tab 250 are connected, and local degradation of the positive electrode plate 210 and the negative electrode plate 220 may be prevented or substantially prevented.

Similarly, as shown in FIG. 15, in the part of the area of the electrode assembly 200 located relatively close to the rear portion 113 of the case 100, only the second positive electrode tab 250 and the first negative electrode tab 260 may be connected to the first subplate 410 and the second subplate 510, respectively, and the first positive electrode tab 240 and the second negative electrode tab 270 may not be connected to the first subplate 410 and the second subplate 510.

Accordingly, a current flowing into the first negative electrode tab 260 from the part of the area of the electrode assembly 200 located relatively close to the rear portion 113 of the case 100 may be transmitted to the second positive electrode tab 250 through the negative electrode plate 220 and the positive electrode plate 210.

In an embodiment, the first negative electrode tab 260 and the second positive electrode tab 250 are spaced apart from each other in the third direction, and a path of a current may be formed to traverse the negative electrode plate 220 and the positive electrode plate 210 in a diagonal direction.

As an example, with respect to the positive electrode plate 210, a path of a current flowing into an end portion of the first positive electrode section 210a may be formed toward another end portion of the second positive electrode section 210b.

Accordingly, in the secondary battery 2 according to an embodiment, in the part of the area of the electrode assembly 200 located relatively close to the front portion 112 of the case 100, a current may be more uniformly distributed to the first positive electrode section 210a, the second positive electrode section 210b, and the third positive electrode section 210c as compared to a case in which the first negative electrode tab 260 and the first positive electrode tab 240 are connected, and a local degradation of the positive electrode plate 210 and the negative electrode plate 220 may be prevented or substantially prevented.

Herein, a secondary battery 2 according to another embodiment of the present disclosure will be described.

The secondary battery 2 according to the present embodiment may differ from the secondary battery 2 according to the previously described embodiment of the present disclosure in terms of detailed configurations of a case 100, a first terminal 310, and a second terminal 320.

Accordingly, in describing the secondary battery 2 according to the present embodiment, only configurations of the case 100, the first terminal 310, and the second terminal 320, which are different from those of the secondary battery 2 according to the previously described embodiment of the present disclosure, will be described.

The description of the secondary battery 2 according to the previously described embodiment of the present disclosure may be directly applied to the remaining configuration of the secondary battery 2 according to the present embodiment.

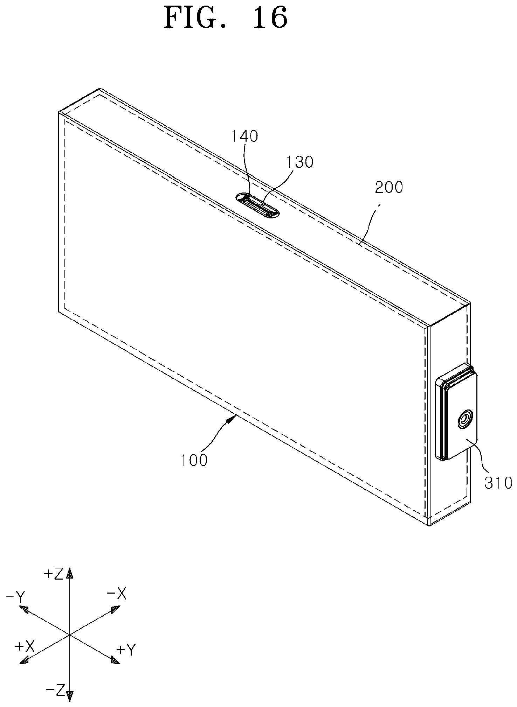

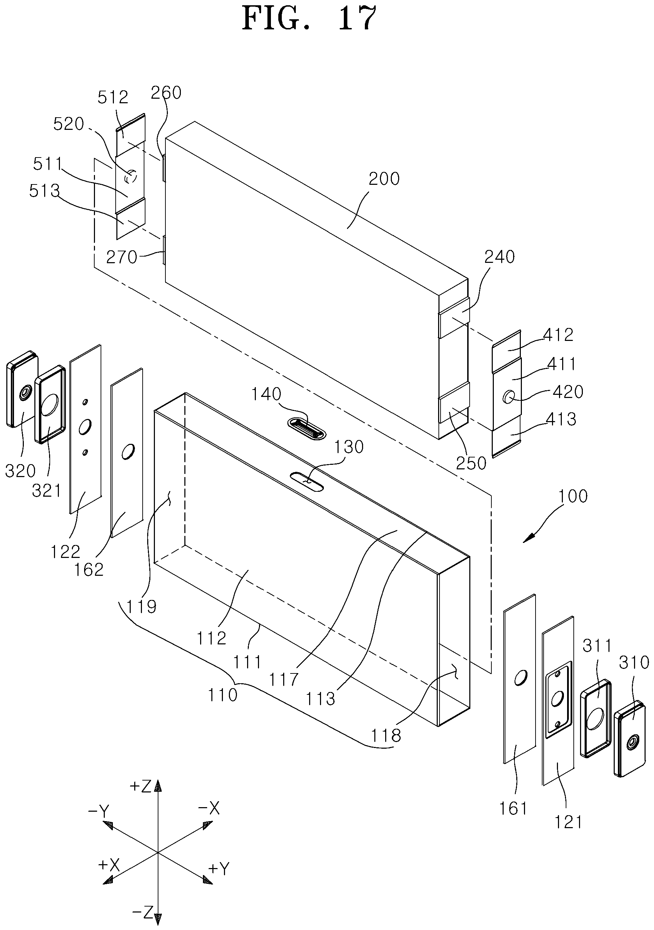

FIG. 16 is a schematic perspective view illustrating a configuration of the secondary battery 2 according to another embodiment of the present disclosure; and FIG. 17 is a schematic exploded perspective view illustrating the configuration of the secondary battery 2 of FIG. 16.

Referring to FIGS. 16 and 17, the case 100 according to the present embodiment may include a can 110, a first cap plate 121, and a second cap plate 122.

The can 110 according to the present embodiment may include a bottom portion 111, a front portion 112, a rear portion 113, a ceiling portion 117, a first opening 118, and a second opening 119.

The bottom portion 111, the front portion 112, and the rear portion 113 may be the same as the bottom portion 111, the front portion 112, and the rear portion 113 according to the previously described embodiment of the present disclosure.

The ceiling portion 117 may form an exterior of an upper side (see FIG. 16) of the case 100. The ceiling portion 117 according to the present embodiment may have a rectangular plate shape. The ceiling portion 117 may be disposed to face the bottom portion 111 in a third direction. The ceiling portion 117 may be disposed to be spaced by a distance (e.g., a predetermined distance) from the bottom portion 111 in a direction opposite to the third direction.

The first opening 118 may be formed to pass through the can 110 in a second direction.

The first opening 118 according to the present embodiment may be a space surrounded by first end portions of the bottom portion 111, the front portion 112, the rear portion 113, and the ceiling portion 117. A first positive electrode tab 240 and a second positive electrode tab 250 of an electrode assembly 200 may be located to face the first opening 118 inside the can 110.

The second opening 119 may be formed to pass through the can 110 in a direction opposite to the second direction.

The second opening 119 according to the present embodiment may be a space surrounded by second end portions of the bottom portion 111, the front portion 112, the rear portion 113, and the ceiling portion 117. A first negative electrode tab 260 and a second negative electrode tab 270 of the electrode assembly 200 may be located to face the second opening 119 inside the can 110.

That is, the can 110 according to the present embodiment may have a structure in which the first side portion 114 and the second side portion 115 are opened by the first opening 118 and the second opening 119, respectively, and the opening 116 is closed by the ceiling portion 117 in the can 110 according to an embodiment of the present disclosure.

The first cap plate 121 may seal the first opening 118.

The first cap plate 121 according to the present embodiment may be formed to have a flat plate shape. The first cap plate 121 may be disposed at the first opening 118 of the can 110. The first cap plate 121 may be located to face the first positive electrode tab 240 and the second positive electrode tab 250 of the electrode assembly 200 in the second direction. An edge area of the first cap plate 121 may be coupled to the first end portions of the bottom portion 111, the front portion 112, the rear portion 113, and the ceiling portion 117 through any of various types of coupling methods including welding, bolting, fitting, latching and the like.

A first insulating plate 161 may be disposed between the first cap plate 121 and the electrode assembly 200. The first insulating plate 161 may insulate the first cap plate 121 from the electrode assembly 200 by preventing or substantially preventing direct contact between the first cap plate 121 and the electrode assembly 200.

According to the present embodiment, the first insulating plate 161 may be disposed to face the electrode assembly 200 in the second direction inside the case 100. That is, the electrode assembly 200, the first insulating plate 161, and the first cap plate 121 may be sequentially disposed in the second direction. The first insulating plate 161 may be fixed on an inner surface of the case 100 through any of various types of coupling methods including fitting, latching, welding, bolting, bonding and the like. The first insulating plate 161 may be formed of an insulating material, such as PE, PP, PET, or rubber.

The second cap plate 122 may seal the second opening 119.

The second cap plate 122 according to the present embodiment may be formed to have a flat plate shape. The second cap plate 122 may be disposed at the second opening 119 of the can 110. The second cap plate 122 may be located to face the first negative electrode tab 260 and the second negative electrode tab 270 of the electrode assembly 200 in a direction opposite to the second direction. An edge area of the second cap plate 122 may be coupled to the second end portions of the bottom portion 111, the front portion 112, the rear portion 113, and the ceiling portion 117 through any of various types of coupling methods including welding, bolting, fitting, latching and the like.

A second insulating plate 162 may be disposed between the second cap plate 122 and the electrode assembly 200. The second insulating plate 162 may insulate the second cap plate 122 from the electrode assembly 200 by preventing or substantially preventing direct contact between the second cap plate 122 and the electrode assembly 200.

According to the present embodiment, the second insulating plate 162 may be disposed to face the electrode assembly 200 in the direction opposite to the second direction inside the case 100. That is, the electrode assembly 200, the second insulating plate 162, and the second cap plate 122 may be sequentially disposed in the direction opposite to the second direction. The second insulating plate 162 may be fixed on the inner surface of the case 100 through any of various types of coupling methods including fitting, latching, welding, bolting, bonding and the like. The second insulating plate 162 may be formed of an insulating material, such as PE, PP, PET, or rubber.

According to an embodiment, a vent hole 130 and a vent 140 may be formed in the ceiling portion 117 of the can 110. However, the present disclosure is not limited thereto, and the vent hole 130 and the vent 140 may be formed in at least one of the first cap plate 121 and the second cap plate 122.

The first terminal 310 according to the present embodiment may be fixed on the first cap plate 121.

As an example, the first terminal 310 may be inserted into the first cap plate 121. An end portion of the first terminal 310 may protrude in the second direction from the first cap plate 121.

A first gasket 311 may be disposed between the first cap plate 121 and the first terminal 310.

The second terminal 320 according to the present embodiment may be fixed on the second cap plate 122.

For example, the second terminal 320 may be inserted into the second cap plate 122. An end portion of the second terminal 320 may protrude in the direction opposite to the second direction from the second cap plate 122.

A second gasket 321 may be disposed between the second cap plate 122 and the second terminal 320.

A first current collector 420 according to the present embodiment may protrude from a first center plate 411 toward the first cap plate 121. The first current collector 420 may pass through the first cap plate 121 and may be in contact with the first terminal 310. The first current collector 420 may be connected to the first terminal 310 through any of various coupling methods including welding, bolting, and the like.

A second current collector 520 according to the present embodiment may protrude from a second center plate 511 toward the second cap plate 122. The second current collector 520 may pass through the second cap plate 122 and may be in contact with the second terminal 320. The second current collector 520 may be connected to the second terminal 320 through any of various coupling methods including welding, bolting, and the like.

According to embodiments of the present disclosure, an electrode tab extending from an electrode assembly can be bent to improve the bonding strength of the electrode tab.

According to embodiments of the present disclosure, bending directions of electrode tabs having the same polarity are formed differently, thereby securing an electrical connection to all of a plurality of positive and negative electrode plates.

According to embodiments of the present disclosure, bending directions of electrode tabs having different polarities at the same height are formed differently, thereby inducing a current to be uniformly distributed in an entire area of positive and negative electrode plates in a peripheral area of an electrode assembly.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. An electrode assembly (200) comprising:
one or more positive electrode plates (210);
one or more negative electrode plates (220) facing the one or more positive electrode plates (210) in a first direction;
a first positive electrode tab (240) extending from a positive electrode plate (210) of the one or more positive electrode plates (210) and bent in the first direction;
a second positive electrode tab (250) extending from the positive electrode plate (210) and bent in a direction opposite to the first direction;
a first negative electrode tab (260) extending from a negative electrode plate (220) of the one or more negative electrode plates (220) and bent in the direction opposite to the first direction; and
a second negative electrode tab (270) extending from the negative electrode plate and bent in the first direction.

2. The electrode assembly (200) as claimed in claim 1, wherein the first positive electrode tab (240) and the second positive electrode tab (250) extend from the positive electrode plate (210) in a second direction intersecting the first direction, and
the first negative electrode tab (260) and the second negative electrode tab (270) extend from the negative electrode plate (220) in a direction opposite to the second direction.

3. The electrode assembly (200) as claimed in claim 2, wherein the first positive electrode tab (240) and the second positive electrode tab (250) are spaced apart from each other in a third direction intersecting the first direction and the second direction.

4. The electrode assembly (200) as claimed in claim 3, wherein the positive electrode plate (210) comprises a first positive electrode section (210a) and a second positive electrode section (210b) arranged in the third direction,
the first positive electrode tab (240) is connected to the first positive electrode section (210a), and
the second positive electrode tab (250) is connected to the second positive electrode section (210b).

5. The electrode assembly (200) as claimed in claim 4, wherein areas of the first positive electrode section (210a) and the second positive electrode section (210b) are equal to each other.

6. The electrode assembly (200) as claimed in claim 4 or 5, wherein the positive electrode plate (210) further comprises at least one third positive electrode section between the first positive electrode section (210a) and the second positive electrode section (210b).

7. The electrode assembly (200) as claimed in claims 4 to 6, wherein the negative electrode plate (220) comprises a first negative electrode section (220a) and a second negative electrode section (220b) arranged in the third direction,
the first negative electrode tab (260) is connected to the first negative electrode section (220a), and
the second negative electrode tab (270) is connected to the second negative electrode section (220b).

8. The electrode assembly (200) as claimed in claim 7, wherein the first positive electrode section (210a) and the first negative electrode section (220a) face each other in the first direction.

9. The electrode assembly (200) as claimed in claim 7 or 8, wherein the negative electrode plate (220) further comprises at least one third negative electrode section (220c) between the first negative electrode section (220a) and the second negative electrode section (220b).

10. A secondary battery (2) comprising:
a case (100);
the electrode assembly (200) as claimed in claims 1 to 9 accommodated in the case (100);
a first terminal (310) and a second terminal (320) protruding outward from the case (100);
a first connection member (400) in the case (100) and configured to connect the first positive electrode tab (240) and the second positive electrode tab (250) to the first terminal (310); and
a second connection member in the case (100) and configured to connect the first negative electrode tab (260) and the second negative electrode tab (270) to the second terminal (320).

11. The secondary battery (2) as claimed in claim 10, wherein the case (100) comprises a can having an opening (119) and a cap plate (120) configured to seal the opening (119), and
the first terminal (310) and the second terminal (320) are fixed to the cap plate (120).

12. The secondary battery (2) as claimed in claim 10, wherein the case (100) comprises a can (110) having a first opening (118) and a second opening (119), a first cap plate (121) configured to seal the first opening (118), and a second cap plate (122) configured to seal the second opening (119),
the first terminal (310) is fixed to the first cap plate (121), and
the second terminal (320) is fixed to the second cap plate (122).

13. The secondary battery (2) as claimed in claims 10 to 12, wherein the first connection member (400) comprises:
a first subplate (410) connected to the first positive electrode tab (240) and the second positive electrode tab (250); and
a first current collector (420) extending from the first subplate (410) and connected to the first terminal (310).

14. The secondary battery (2) as claimed in claim 13, wherein the first subplate (410) comprises:
a first center plate (411);
a first positive electrode subplate (412) extending from the first center plate (411) and in contact with the first positive electrode tab (240); and
a second positive electrode subplate (413) extending from the first center plate (411) and in contact with the second positive electrode tab (250).

15. A battery pack comprising:
a housing (10); and
one or more secondary batteries, each being the secondary battery (2) as claimed in claims 10 to **14** and accommodated in the housing (10).
